# EUROPEAN PATENT SPECIFICATION

(11) **EP 0 561 987 B1**
(45) Date of publication and mention of the grant of the patent: **19.07.1995**
(21) Application number: 92902200.2
(22) Date of filing: 10.12.1991
(51) Int. Cl.: C09D 127/18

(54) **NON-STICK COATING SYSTEM WITH PTFE OF DIFFERENT MELT VISCOSITIES FOR CONCENTRATION GRADIENT**
DEHÄSIVES BESCHICHTUNGSSYSTEM AUS PTFE MIT UNTERSCHIEDLICHEN SCHMELZVISKOSITÄTEN ZUR ERHALTUNG EINES KONZENTRATIONSGRADIENTEN
SYSTEME DE REVETEMENT NON COLLANT A PTFE DE DIFFERENTES VISCOSITES A CHAUD PERMETTANT D'OBTENIR UN GRADIENT DE CONCENTRATION

(30) Priority: 12.12.1990 US 626607; 12.12.1990 US 626499; 12.12.1990 US 626500
(43) Date of publication of application: 29.09.1993
(73) Proprietor: E.I. DU PONT DE NEMOURS AND COMPANY, Wilmington Delaware 19898 (US)
(72) Inventor: TANNENBAUM, Harvey, Paul, Wynnewood, PA 19096 (US)
(74) Representative: Abitz, Walter, Dr.-Ing.
(86) International application number: US9109064
(87) International publication number: WO9210549

(56) References cited:
- US-A- 4 167 605
- US-A- 4 548 986

## Description

### BACKGROUND OF THE INVENTION

This invention relates to coatings systems, such as for cookware, which minimize sticking. More particularly, it relates to multilayer coating systems that can be used directly on smooth, untreated substrates and which provide concentration gradients within the coating.

Generally in the art a metal or glass substrate is roughened by some means before the first layer of coating is applied so that mechanical bonding will assist chemical adhesive means in holding the coating onto the substrate. Typical roughening means include acid etching, sand-blasting, grit-blasting, and baking a rough layer of glass, ceramic or enamel frit onto the substrate. The problem of adhesion of non-stick coatings to substrates is exacerbated by the nature of the coatings. If the coating is optimized for release to prevent food particles from sticking to it, for easy clean-up after cooking or durability, or to facilitate low friction sliding contact, almost by definition there will be difficulties in making it adhere well to the substrate.

The substrate can be metal, often aluminum or stainless steel used for cookware or industrial applications. It can be glass or ceramic. It might even be plastic for microwave oven cookware, or it could be an industrial article such as a saw made of carbon steel. Whatever the substrate or the application, if it is necessary to roughen the substrate to make the coating adhere, that at least adds cost and can cause other difficulties including creating a rough profile which can protrude or telegraph through the coating. This is especially undesirable when smoothness is sought, such as for saws, steam irons and copier rolls. The environmental cost of disposing of etchant materials can be significant. Sometimes, especially for glass and ceramic substrates, it also can cause unacceptable weakness or brittleness of the substrate.

Means of enhancing adhesion of non-stick coatings to a substrate are illustrated by the following patents.

U.S. 4,049,863 - Vassiliou (1977) teaches a primer containing fluoropolymer, such as polytetrafluoroethylene (PTFE), colloidal silica and a polyamide imide (PAI), along with other constituents, applied by various techniques to a substrate that is preferably pretreated by grit blasting, flame spraying of metals or metal oxides or frit coating, or to phosphated and chromated metals. The PTFE:PAI ratio can be 1:9. The primer coat is ordinarily applied to a dry film thickness (DFT) of about 2-15 microns (»m). After air drying, the primer is topcoated with a conventional fluoropolymer enamel and baked. (Parts, percentages and proportions herein are by weight except where indicated otherwise.)

U.S. 4,087,394 - Concannon (1987) discloses aqueous concentration gradient coatings of fluoropolymer which is 20-80% of a homopolymer or a copolymer of fluorinated ethylene-propylene (FEP) made of 5-100% tetrafluoroethylene (TFE) with 95-0% hexafluoropropylene (HFP), with 80-20% of a film forming polymer which can be PAI. The coating is applied by spraying onto aluminum sheet, or a variety of substrates. Other application techniques are mentioned. Nothing is said about substrate preparation. Although PTFE and FEP are treated as a continuum, there are no suggestions to use a blend such as 50% PTFE, 50% FEP.

U.S. 3,928,675 and 3,857,852, both to Tieszen, teach the use of high viscosity (>10¹⁰⁾ and low viscosity (10⁴ poise) (10⁹ and 10³ Pa Sec) PTFE along with polyarylene sulfide such as polyphenylene sulfide (PPS) in coatings.

### SUMMARY OF THE INVENTION

The present invention, in certain of its embodiments, provides a coating composition comprising perfluorocarbon resin and at least one of polyamide imide and polyether sulfone resins, wherein the perfluorocarbon resin comprises at least two different polytetrafluoroethylene resins, the first having a melt viscosity of at least 10⁶ poises (10⁵ Pa Sec), and the second having a melt viscosity in the range of 10³ to 10⁸ poises (10² to 10⁷ Pa Sec), with the melt viscosity of the first being at least 10² poises (Pa Sec) higher than that of the second.

The invention also comprises multi-layer coating systems on substrates with the defined coating composition in the primer or in the topcoat.

### DETAILED DESCRIPTION

The present invention permits not only lower cost by avoiding the roughening of the substrate but also smoother coated surfaces which can be advantageous for release on cookware, and for the gliding effect on steam iron plates. Also it can allow elimination of costly polishing of coated copier roll surfaces and application of dispersion PTFE coatings by coil coating and roller coating techniques.

Various embodiments of the invention involve using at least two PTFE resins having different melt viscosities in a primer or a topcoat. One pair of resins has relatively high and low melt viscosity resins. Another has relatively low and lower still melt viscosity resin.

The adhesion of high melt viscosity fluoropolymer coating to all types of metal substrates, particularly to smooth metal, can be significantly improved through chemically induced stratification or formation of a concentration gradient in the primer.

Addition of perfluorocarbon polymer having a low melt viscosity (MV) in the range of 10³ - 10⁸ poise (10² - 10⁷ Pa Sec), to a primer system composed of PTFE with a high MV of 10¹¹ poise (10¹⁰ Pa Sec) and a polymeric binder such as polyamide-imide or polyether sulfone, imparts a synergistic effect in which the fluoropolymer stratifies away from the substrate interface allowing the polymeric binder to obtain a higher concentration and degree of cure at the substrate interface resulting in improved adhesion. The required cure temperature to achieve this stratification can be modified by the choice of fluoropolymer.

Melt viscosity of perfluoropolymers can be determined by known technique such as that in U.S. Patent 4,636,549 - Gangal et al (1987). See Col. 4, lines 25-63.

With use of the coatings of the invention on smooth substrates, treated only by washing to remove grease and any other contaminants which might interfere with adhesion, coating systems of the invention give good food release and good resistance to usual durability tests such as the "tiger paw" abuse cooking tests involving a weighted holder with multiple ball point pen shafts rotating around the inside of a frying pan during cooking tests. The tests are generally described in U.S. Patent 4,252,859, --Concannon and Vary (1981) col. 2, lines 14-24.

Typical prior art preparation of surfaces to enhance adhesion of a release coating has involved etching or sand or grit blasting to develop a surface profile. The profile is measured in average microinches using a model RT 60 surface roughness tester made by Alpa Co. of Milan, Italy. The profile on typical rolled aluminum after washing to remove grease and contaminants is 16-24 microinches (.6 - 0.96 »m). The profile on steel varies more widely but is typically less than 50 microinches (2 »m). On both steel and aluminum, before a release coating is applied the profile typically is increased to over 100 micro inches (4 »m), preferably for aluminum for some uses to 180-220 micro inches (7.2 - 8.8 »m). Thus, the present invention is particularly useful with steel or aluminum substrates having a profile of less than 100, preferably less than 50 micro inches (less than 4 »m; preferably less than 2 »m).

Similar effects can be achieved using a low MV (at least 10⁶ poise or 10⁵ Pa Sec) PTFE with a lower still Mv (10³ to 10⁵ poise or 10² to 10⁴ M Pa Sec) PTFE. To obtain stratification, it is desirable to have a difference of at least 10² poise in melt viscosities of the two PTFE's.

The primers of the invention can also be used on substrates roughened in various ways known in the art to make coating systems even better than without such undercoats. This can combine improved chemical adhesion with mechanical effects to produce products that may be superior.

In the following examples, the polyamide imide, colloidal silica and dispersions are known in the art and preferably are those of U.S. Patent 4,049,863 - Vassiliou (1977); and the ultramarine blue is that of U.S. Patent 4,425,448 - Concannon and Rummel (1984).

U.S. Patent 4,049,863, shows that binders for fluoropolymer coating can be provided in the form of amine salts of polyamide acids. As is known in the art and illustrated by U.S. Patents 4,014,834 - Concannon and 5,079,073 - Tannenbaum, the polyamide acid also known as polyamic acids, form polyamide imides in the coating compositions and on curing, all of which are equivalent in these coatings and compositions.

The following examples and test data demonstrate this improved adhesion when used as a primer for fluoropolymer topcoats. The fluoropolymers are provided as 60% dispersions in water. As usual, the solids content of dispersions is indicated in the tables. The compositions were blended by techniques normal in the art and them applied to a smooth, degreased aluminum substrate by spraying.

### EXAMPLE 1: Polymerization and Concentration of Lower MV PTFE

A cylindrical, horizontally disposed, water jacketed, stirred, stainless steel reactor having a length to diameter ratio of about 1:5, a 4-bladed cage-type agitator running the length of the reactor, and a water capacity of about 80 parts was charged with 46 parts of demineralized water and 0.022 parts of ammonium perfluorocaprylate dispersing agent. The reactor was pressure tested at 2.8 MPa and 90°C while stirring the reactor contents at 46 rpm. The reactor was then cooled to reduce the temperature of its contents below 30°C. The reactor was then evacuated and purged three times with tetrafluoroethylene (TFE) monomer, leaving a reduced pressure on the reactor after the final evacuation. A valve was then opened to slowly release ethane into the reactor until the pressure was raised by 0.06 MPa. The valve was then closed and the reactor temperature was raised to 90°C with the agitator running at 46 rpm. After the temperature reached 90°C, the reactor was pressurized with TFE to a pressure of 2.6 MPa. A freshly prepared solution of 1.1 parts of a solution of (0.1%) ammonium persulfate (APS) and (1.5%) disuccinic acid peroxide (DSP) in demineralized water was pumped into the reactor at a rate of 0.11 parts/minute to initiate polymerization. After polymerization began (0.07 MPa drop in reactor pressure), additional TFE was added to the reactor at a rate so as to maintain the pressure at 2.6 MPa. After 3 parts of TFE had been added to the reactor after kickoff, 2.2 parts of a 2.4% solution of ammonium perfluorocaprylate in demineralized water was pumped into the reactor at a rate of 0.2 parts/minute. After 15 parts TFE addition, 0.66 parts of a solution of APS (0.05%), DSP (0.5%), and methanol (0.5%) in demineralized water were pumped into the reactor at a rate of 0.11 parts/minute. When 22 parts of TFE had been added to the reactor, the TFE feed was stopped but the reaction was continued until the reactor pressure dropped to 1.3 MPa. The reactor was then vented and the product dispersion was removed. The dispersion contained about 34% polymer by weight. A small amount of the dispersion was coagulated by the application of vigorous stirring and the resulting powder was then dried in a 120°C oven.

The melt viscosity of the dried resin was measured at 372°C by the procedure described in ASTM D-1238-52T modified by (1) using a cylinder, orifice, and piston tip made of a corrosion-resistant alloy, Haynes Stellite 19, (2) charging a 5.0 g sample to the 9.53 mm ID cylinder, and (3) five minutes after charging, the sample is extruded through a 2.10 mm diameter, 8.00 mm long square-edged orifice under a load of 5000 g. The melt viscosity in poise was calculated as 36,910 divided by the observed extrusion rate expressed in grams per minute. The melt viscosity of this dried powder was 5.6 x 10⁴ poise (5.6 x 10³ Pa Sec).

The remaining as-polymerized dispersion was heated to 80°C while gently stirring. When the temperature reached 40-45°C, a weight of Triton X-100 non-ionic surfactant of octyl phenol polyether alcohol sold by Rohm and Haas Co. equivalent to 8% of the weight of polymer was added to the dispersion. Citric Acid (0.02% based on polymer) and then 19% aqueous ammonium carbonate solution (0.7% based on polymer) were then added. When the temperature reached 80°C, the agitation and heat were stopped. Upon cooling, the dispersion separated into two layers with nearly all of the polymer being concentrated in the lower layer. This lower layer was removed and analyzed for % solids and % Triton X-100. The respective levels were found to be 53.6% solids and 3.7% Triton X-100. Adjustments were made with water and Triton X-100 additions so that the final levels were 46.7% and 8.9% respectively.

### EXAMPLE 2: Polymerization and Concentration of Higher MV PTFE

A batch was polymerized in a similar manner to that described in Example 1 except for the following; (1) the precharge included 1.3 lbs. of paraffin wax, and (2) chloroform (0.026 parts) was added to the reactor in place of ethane. All other respects of the polymerization were identical to that described in Example 1. The product dispersion contained 34% (by weight) polymer.

A small amount of the dispersion was coagulated and dried. The melt viscosity of the dried powder was measured as above except that the 5000 g weight was replaced by a 15,000 g weight. The melt viscosity was then calculated by dividing 110,250 by the observed melt flow in grams per minute. The value obtained was 7.3 x 10⁶ poise.

The remaining dispersion was concentrated in an identical manner to that described above except that the ammonium carbonate solution was replaced by an equivalent amount of 28% ammonium carbonate solution. The final solids level was 60.2% and the Triton X-100 level was 5.9%.

Low MV PTFE for the invention can be provided in the form of as-polymerized micropowder made in accordance with this example or in the form of irradiated and comminuted micropowder made by techniques such as taught by the above-identified Brown et al and Derbyshire patents.

### EXAMPLE 3: Low MV PTFE/Regular PTFE - Multiple Coat System Composition:

**Table 1**

| Weight Percent | |
|---|---|
| 0.008 | Zinc oxide |
| 0.050 | "Afflair 153" titania coated mica from EM Industries |
| 6.701 | Ultramarine blue pigment |
| 6.966 | "T-30" PTFE from Du Pont |
| 1.002 | "Ludox AM" colloidal silica from Du Pont |
| 4.760 | L171 PTFE micropowder from ICI |
| 4.790 | AI-10 polyamide imide resin from Amoco |
| 66.319 | Deionized water |
| 0.455 | "Triton X-100" octyl phenol polyether alcohol |
| | non-ionic surfactant from Rohm and Haas |
| 0.676 | Diethylethanolamine |
| 1.352 | Triethylamine |
| 3.728 | Furfuryl alcohol |
| 3.193 | N-methyl pyrolidone |
| 1̅0̅0̅.̅0̅0̅0̅ TOTAL | |

### Application:

This system is comprised of a primer of the invention which is applied at 5-10 »m dry film thickness (DFT) to a metal surface which has been washed to remove oil and dirt contamination, air dried, and topcoated with a single (15-17.5 »m DFT) or multiple topcoats in thicknesses of 12.5-17.5 »m DFT each and having compositions similar to those shown in the Table 1. The films are baked 10 minutes at 150°C followed by a high temperature bake for a minimum of 3 minutes over 415°C.

Two different proportions of resins were used as a primer with a topcoat on smooth aluminum cookware which was subjected to tiger paw testing, described above. The number of standard cooking cycles to a rating of 5, determined by coating deterioration, was recorded and presented below along with the percentages of the comparable value for a commercial coating on a grit-blasted substrate run as a control. The results are better than many good commercial products.

### Testing:

**Table 2**

| Cooking Performance of Low MV PTFE/PTFE Primer | | | | | |
|---|---|---|---|---|---|
| Low MV/Regular PTFE | | DFT | Range | Cooks to Rating of 5 % of | |
| System | Surface | | | Average | Commercial |
| 40/60 | Smooth | 1.0-1.1 | 55-70 | 62 | 103 |
| 30/70 | Smooth | 1.0-1.1 | 55-60 | 60 | 100 |

Low MV PTFE for the invention can be provided in the form of as-polymerized micropowder made in accordance with Example 1 or in the form of irradiated and comminuted or ground micropowder made by known techniques.

A preferred topcoat is that of Example 1 of U.S. Patent 4,118,537. Alternatively, the coats above the undercoat and primer (topcoat and optional intermediate coats) can be those of U.S. Patent 4,252,854; 4,351,882; and 4,425,448, and combinations thereof.

### EXAMPLE 4: Single Coat Unique Coating Characteristics:

This coating is unique in that one can obtain excellent adhesion to smooth metal at fluoropolymer to binder ratios of up to 10:1. It produces a high gloss appearance and a silky feel in a one-coat. The two types of PTFE were made in accordance with Examples 1 and 2.

### Composition:

**Table 1**

| Low MV PTFE Single Coat | |
|---|---|
| Weight Percent | |
| 2.080 | "Afflair 153" titania coated mica from EM Industries |
| 1.984 | Channel black pigment |
| 0.992 | Aluminum silicate |
| 14.664 | PTFE MV = 7.3 x 10⁶ poise (7.3 x 10⁵ Pa Sec) |
| 3.489 | "Ludox AM" colloidal silica from Du Pont |
| 11.742 | PTFE MV = 5.6 x 10⁴ poise (5.6 x 10³ Pa Sec) |
| 3.394 | AI-10 polyamide imide resin from Amoco |
| 0.138 | Sodium polynaphthalene sulfonate |
| 53.352 | Deionized water |
| 1.784 | "Triton X-100" octyl phenol polyether alcohol non-ionic surfactant from Rohm and Haas |
| 0.479 | Diethylethanolamine |
| 0.958 | Triethylamine |
| 2.607 | Furfuryl alcohol |
| 2.263 | N-methyl pyrolidone |
| 0.074 | Triethanol amine |
| 1̅0̅0̅.̅0̅0̅ TOTAL | |

### Application:

Applied at 17.5-20 »m dry film thickness (DFT) to degreased metal and cured for 10 minutes at 150°C followed by 3 minutes at 427°C. Testing:

This coating passes fingernail adhesion and crosshatch testing both prior to and after boiling in water for 15 minutes.

Low MV PTFE for the invention can be provided in the form of as-polymerized micropowder made in accordance with Example 1 or in the form of irradiated and comminuted micropowder.

If, instead of using the coatings of the invention as a single coat, it is desired to use them as primers, then a preferred topcoat is that of Example 1 of U.S. Patent 4,118,537. Alternatively, the coats above the undercoat and primer (topcoat and optional intermediate coats) can be those of U.S. Patent 4,252,854; 4,351,882; and 4,425,448, and combinations thereof.

### EXAMPLE 5: Topcoat

**Table 2**

| INGREDIENT | TOPCOAT 1 | TOPCOAT 2 |
|---|---|---|
| "T-30" PTFE from Du Pont | 280.74 | 196.52 |
| PTFE MV=5.6 x 10⁴ poises (5.6 x 10³ Pa Sec) from Example 1 | 16.85 | 101.07 |
| "Afflair 153" titania-coated mica from EM Industries | 0.42 | 0.42 |

| Organic Liquids | | |
|---|---|---|
| Butyl Carbitol 9.67 | | (ditto Topcoat 1) |
| Hydrocarbon Solvent 11.95 | | |
| Cerium Octate 2.25 | | |
| Triethanol Amine 18.52 | | |
| Oleic Acid 4.95 | | |
| Triton X-100 2.45 | | |
| Total Organic Liquids | 50.01 | 50.01 |
| Acrylic Latex of 39 parts by weight terpolymer of methyl methacrylate/57 parts ethyl acrylate/4 parts methacrylic acid, dispersion at 40% solids in water, 0.2 »m average particle size | 52.12 | 52.12 |
| Carbon black mill base | 5.99 | 5.99 |
| Ultramarine blue mill base | 1.34 | 1.34 |

### Application:

This system is comprised of a primer of PTFE, FEP and polyamide imide of Example 1 which is applied at 5-10 »m dry film thickness (DFT) to a metal surface which has been washed to remove oil and dirt contamination, air dried, and topcoated with a single (15-17.5 »m DFT) or multiple topcoats of this example in thicknesses 12.5-17.5 »m DFT each and having compositions similar to those shown in Table 2. The films are baked 10 minutes at 150°C followed by a high temperature bake for a minimum of 3 minutes over 415°C.

### EXAMPLE 6: Testing

Smooth aluminum bakeware with cupcake-shaped depressions were coated with primer of Example 4 and topcoat of Example 5. A variety of types of baked goods were baked, then the bakeware was turned upside down. If the baked goods fell out easily, leaving no residue, the coating was rated best. Increasing amounts of residue sticking to the coating, and the need to hit the back of the bakeware or even to dig the baked goods out with a tool, gave progressively lower ratings. Trials were made on bakeware with and without cooking grease applied between bakes.

The results without grease were equivalent to commercial coatings, and with grease were superior to commercial coatings.

For use with the topcoats of the invention, primers can be applied direct to smooth, degreased substrates, or the substrates can be grit-blasted or etched to provide a greater profile, or frits can be applied first to the substrates.

## Claims

1. An aqueous coating composition comprising perfluorocarbon resin and at least one of polyamide imide and polyether sulfone resins, wherein the perfluorocarbon resin comprises at least two different polytetrafluoroethylene resins, the first having a melt viscosity of at least 10⁵ Pa Sec and the second having a melt viscosity in the range of 10² to 10⁷ Pa Sec, with the melt viscosity of the first being at least 10² Pa Sec higher than that of the second,
wherein the composition contains, by weight, 61 to 81% perfluorocarbon resin and 15 to 30% of at least one of polyamide-imide and polyether sulfone resin, and about 3-5% colloidal silica and 1-4% surfactant,
wherein the perfluorocarbon resin contains, by weight, about 50-90% of said first resin, and 50-10% of said second resin.

2. The coating composition of claim 1 wherein the melt viscosity of said first resin is at least 10¹⁰ Pa Sec and of said second resin is in the range of 10³-10⁵ Pa Sec.

3. The coating composition of claim 1 wherein the melt viscosity of said first resin is at least 10⁵ M Pa Sec and of said second resin is in the range of 10²-10⁴ Pa Sec.

4. The coating composition of Claim 2, contains by weight, about 3-5% colloidal silica, 1-4% surfactant, 15-30% polyamide imide resin, and perfluorocarbon resin and the perfluorocarbon resin consits essentially of 60-85% of said first resin, the balance said second resin.

5. A coated substrate wherein the coating comprises a coating composition of Claim 1 and the substrate is free of contaminants that would prevent adhesion of the coating.

6. The coated substrate of claim 6 wherein the coating is a multi-layer non-stick coating comprising a primer, a topcoat and up to one or more intermediate coats between the primer and the topcoat.

7. The coated substrate of claim 7 wherein the primer is said coating composition.

8. The coated substrate of claim 7 wherein the topcoat is said coating composition.

## Patentansprüche

1. Wäßrige Überzugsmasse, umfassend Perfluorkohlenstoffharz und wenigstens eines von Polyamidimid- und Polyethersulfonharzen, worin das Perfluorkohlenstoffharz wenigstens zwei verschiedene Polytetrafluorethylenharze umfaßt, wobei das erste eine Schmelzviskosität von wenigstens 10⁵ Pa sec und das zweite eine Schmelzviskosität im Bereich von 10² bis 10⁷ Pa sec aufweist, wobei die Schmelzviskosität des ersten wenigstens 10² Pa sec höher ist als diejenige des zweiten,
worin die Masse, bezogen auf das Gewicht, 61 bis 81 % Perfluorkohlenstoffharz und 15 bis 30 % von wenigstens einem von Polyamidimid und Polyethersulfonharz und etwa 3 bis 5 % kolloidale Kieselsäure und 1 bis 4 % oberflächenaktives Mittel enthält,
worin das Perfluorkohlenstoffharz, bezogen auf das Gewicht, etwa 50 bis 90 % des genannten ersten Harzes und 50 bis 10 % des genannten zweiten Harzes enthält.

2. Überzugsmasse nach Anspruch 1, worin die Schmelzviskosität des genannten ersten Harzes wenigstens 10¹⁰ Pa sec beträgt und diejenige des genannten zweiten Harzes im Bereich von 10³ bis 10⁵ Pa sec liegt.

3. Überzugsmasse nach Anspruch 1, worin die Schmelzviskosität des genannten ersten Harzes wenigstens 10⁵ M Pa sec beträgt und diejenige des genannten zweiten Harzes im Bereich von 10²-10⁴ Pa sec liegt.

4. Überzugsmasse nach Anspruch 2, die, bezogen auf das Gewicht, etwa 3-5 % kolloidale Kieselsäure, 1-4 % oberflächenaktives Mittel, 15-30 % Polyamidimidharz und Perfluorkohlenstoffharz enthält, und worin das Perfluorkohlenstoffharz im wesentlichen aus 60-85 % des genannten ersten Harzes besteht, wobei der Rest aus dem genannten zweiten Harz besteht.

5. Überzogenes Substrat, worin der Überzug eine Überzugsmasse nach Anspruch 1 umfaßt und das Substrat frei ist von Verunreinigungen, die die Haftung des Überzugs verhindern würden.

6. Überzogenes Substrat nach Anspruch 6, worin der Überzug ein mehrschichtiger nichtklebender Überzug ist, umfassend einen Primer, eine Deckschicht und bis zu einem oder mehreren Zwischenschichten zwischen Primer und Deckschicht.

7. Überzogenes Substrat nach Anspruch 7, worin der Primer die genannte Überzugsmasse ist.

8. Überzogenes Substrat nach Anspruch 7, worin die Deckschicht die genannte Überzugsmasse ist.

## Revendications

1. Composition de revêtement aqueuse comprenant une résine perfluorocarbonée et au moins une résine choisie parmi les résines de polyamide-imide et de polyéthersulfone, dans laquelle la résine perfluorocarbonée comprend au moins deux résines de polytétrafluoroéthylène différentes, la première ayant une viscosité au fondu d'au moins 10⁵ Pa.s et la seconde ayant une viscosité au fondu dans la gamme de 10² à 10⁷ Pa.s, la viscosité au fondu de la première étant au moins 10² Pa.s plus élevée que celle de la seconde,
dans laquelle la composition contient, en poids, 61 à 81 % de résine perfluorocarbonée et 15 à 30 % d'au moins une résine choisie parmi les résines de polyamide-imide et de polyéthersulfone, et environ 3 à 5 % de silice colloïdale et 1 à 4 % d'agent tensioactif,
dans laquelle la résine perfluorocarbonée contient, en poids, environ 50 à 90 % de ladite première résine et 50 à 10 % de ladite seconde résine.

2. Composition de revêtement selon la revendication 1, dans laquelle la viscosité au fondu de ladite première résine est d'au moins 10¹⁰ Pa.s et de ladite seconde résine est dans la gamme de 10³ à 10⁵ Pa.s.

3. Composition de revêtement selon la revendication 1, dans laquelle la viscosité au fondu de ladite première résine est d'au moins 10⁵ MPa.s et de ladite seconde résine est dans la gamme de 10² à 10⁴ Pa.s.

4. Composition de revêtement selon la revendication 2, contenant, en poids, environ 3 à 5 % de silice colloïdale, 1 à 4 % d'agent tensioactif, 15 à 30 % de résine de polyamide-imide, et de la résine perfluorocarbonée, et la résine perfluorocarbonée est essentiellement constituée de 60 à 85 % de ladite première résine, le reste étant ladite seconde résine.

5. Substrat revêtu, dans lequel le revêtement comprend une composition de revêtement selon la revendication 1 et le substrat est exempt d'impuretés qui empêcheraient l'adhésion du revêtement.

6. Substrat revêtu selon la revendication 6, dans lequel le revêtement est un revêtement multicouche anti-adhésif comprenant une couche primaire, une couche du dessus et une ou plusieurs couches intermédiaires entre la couche primaire et la couche du dessus.

7. Substrat revêtu selon la revendication 7, dans lequel la couche primaire est ladite composition de revêtement.

8. Substrat revêtu selon la revendication 7, dans lequel la couche du dessus est ladite composition de revêtement.
